# EUROPÄISCHE PATENTSCHRIFT

(11) **EP 3 608 300 B1**
(45) Veröffentlichungstag und Bekanntmachung des Hinweises auf die Patenterteilung: **20.09.2023**
(21) Anmeldenummer: 19190398.8
(22) Anmeldetag: 06.08.2019
(51) Int. Cl.: C05F 17/00, C05F 17/50, C05F 3/00

(54) **VERFAHREN ZUR REDUZIERUNG DES NÄHRSTOFFGEHALTS VON GÜLLE UND GEFLÜGELKOT**
METHOD FOR REDUCING THE NUTRIENT CONTENT OF MANURE AND POULTRY FAECES
PROCÉDÉ DE RÉDUCTION DU TENEUR EN NUTRIMENTS DU LISIER ET DES MATIÈRES FÉCALES DE VOLAILLES

(30) Priorität: 06.08.2018 DE 102018119088
(43) Veröffentlichungstag der Anmeldung: 12.02.2020
(73) Patentinhaber: AEV Energy GmbH, 01187 Dresden (DE)
(72) Erfinder: Himmelstoß, Alfons, 01187 Dresden (DE); Reiter, Roland, 93059 Regensburg (DE)
(74) Vertreter: Gottfried, Hans-Peter

(56) Entgegenhaltungen:
- EP-A1- 0 423 889
- EP-A1- 2 657 212
- WO-A1-2013/039582
- DD-A1- 147 091
- DE-A1- 4 041 820
- DE-A1-102005 048 116
- DE-A1-102013 114 786
- DE-A1-102015 002 395
- DE-T2- 69 320 473

## Beschreibung

Die Erfindung betrifft ein Verfahren zur Reduzierung des Nährstoffgehalts von Gülle und Geflügelkot, wobei eine Reduzierung des Gehalts an organischer Trockensubstanz durch den Abbau von Kohlenstoff in einer Biogasanlage gefolgt wird von einer zumindest teilweisen Nährstoffabtrennung aus flüssigem Gärrest der Biogasanlage. Als Nährstoffabtrennung wird die zumindest teilweise Entfernung von Pflanzennährstoffen, insbesondere Stickstoffverbindungen und anderen Nährstoffen wie Phosphor- und Kaliumverbindungen, aus dem flüssigen Gärrest bezeichnet. Der Gärrest im Sinne der vorliegenden Erfindung entsteht durch anaerobe Vergärung in einem Landwirtschaftsbetrieb anfallender bzw. zu der Biogasanlage angelieferter Exkremente aus der Tierzucht, die in der Regel dünnflüssig als Gülle vorliegen, beispielsweise als Schweinegülle oder Rindergülle, aber auch als Geflügelkot.

Diese Exkremente werden in einer Vor- oder Sammelgrube zur weiteren Verarbeitung zwischengelagert. Anschließend wird die Gülle in einer Biogasanlage, in der Regel bei mesophilen oder psychrophilen Temperaturen, unter anaeroben Bedingungen vergoren, um organische Bestandteile soweit wie möglich abzubauen und Energie in Form von Methangas zu gewinnen, das dann zur Umwandlung und für den späteren Prozess, die Abgabe an andere Verbraucher oder im Betrieb selbst genutzt wird. Die Erfindung ist dabei nicht auf Verfahren beschränkt, die ausschließlich Gülle als Eingangsstoff vorsehen, es können auch weitere geeignete Substrate der Vergärung zugesetzt oder ausschließlich eingesetzt werden.

Biogasanlagen, die vorrangig tierische Exkremente und nachwachsende Rohstoffe verarbeiten, oder Anlagen zur Abfallvergärung (nachfolgend als Biogasanlagen bezeichnet) unterscheiden sich, nicht zuletzt bedingt durch den höheren Gehalt an Trockensubtanz im verarbeiteten Substrat, grundlegend von denjenigen Biogasanlagen, die zur Abwasserbehandlung (nachfolgend als Abwasseranlagen bezeichnet) eingesetzt werden. Dabei kommen regelmäßig gänzlich andere Technologien zum Einsatz, die an die jeweils verwendeten Einsatzstoffe angepasst sind. So enthält das Substrat einer Biogasanlage, insbesondere durch seinen natürlichen Faseranteil, genügend Besiedlungsfläche für die verfahrensnotwendigen Bakterienkulturen und die Strömungsgeschwindigkeit durch die Biogasanlage ist gering. Eine künstliche Besiedlungsfläche ist deshalb nicht erforderlich und, im Gegenteil, sogar hinderlich.

Demgegenüber würden die Bakterienkulturen in einer Abwasseranlage, die eine hohe Strömungsgeschwindigkeit aufweist, bald ausgeschwemmt sein. Deshalb sind künstliche Besiedlungsflächen notwendig. Diese würden aber beim Einsatz in einer Biogasanlage sehr schnell verstopfen.

An der vorgenannten Unterscheidung ändert sich auch nichts dadurch, dass es in der Praxis durchaus Jauche oder derart mit Wasser verdünnte Gülle aus der landwirtschaftlichen Produktion geben kann, die in einer Abwasseranlage behandelbar ist.

Eine Aufbereitung des Gärrests, der nach der Behandlung der Gülle in der Biogasanlage vorliegt, auch Biogasgülle oder vergorenes Substrat genannt, macht sich zumeist erforderlich, um eine weitere Verwertung des Gärrests zu erleichtern. Dies betrifft vor allem eine Reduzierung des Volumens, das vornehmlich bei geringem Gehalt an Trockensubstanz (TS-Gehalt) maßgeblich durch den Wasseranteil bestimmt wird und die Kosten der Ausbringung stark erhöht. Wird das Wasser während des Prozessschritts der Separation teilweise in eine flüssige Phase abgeschieden, enthält es dennoch einen Großteil der Nährstoffe, vor allem Stickstoff-, Phosphor- und Kaliumverbindungen, sodass eine weitere Aufbereitung erfolgen muss, ehe es in großer Menge auf landwirtschaftliche Flächen ohne Überschreitung der zulässigen Nährstoffobergrenzen aufgebracht oder gar in ein Gewässer eingeleitet werden kann. In der Regel muss der Nährstoffgehalt eliminiert, zumindest aber erheblich reduziert werden. Die dahinterstehende Problematik betrifft nicht zuletzt die durch einen übermäßigen Nährstoffeintrag hervorgerufene Belastung von Wasserressourcen, vor allem Grundwasser, mit Nitrat.

Verfahren und Anlagen zur Behandlung von Gärrest einer Biogasanlage sind aus dem Stand der Technik bekannt und dienen sehr unterschiedlichen Zielstellungen, vor allem der Reduktion der enthaltenen Wassermenge durch Abscheidung, Separation oder Eindicken, aber auch der Hygienisierung und der Beeinflussung der chemischen Zusammensetzung, beispielsweise zur Gewinnung einer zur Rezirkulation geeigneten Prozessflüssigkeit.

So befassen sich verschiedene Verfahren mit der Reduzierung des Stickstoffgehalts von Abwässern, die im Vergleich zu Gärresten durch einen deutlich niedrigeren Gehalt an organischer Substanz gekennzeichnet sind. Hierzu zählt die Druckschrift DE 40 41 820 A1, die ein Verfahren zur biologischen Nitrifikation von Abwässern landwirtschaftlicher, kommunaler und industrieller Herkunft beschreibt. Bei dem Verfahren wird den Nitrifikanten zusätzlich Kohlendioxid zugeführt und dabei das Kohlendioxid und auch die Prozesswärme für die Nitrifikation und die Denitrifikation aus einer Brennkraftmaschine einer Biogasanlage bezogen. Eine Anwendung auf Gärrest ist weder vorgesehen noch ausführbar, insbesondere wegen der Unterschiede im Gehalt an organischer Trockensubstanz.

Weitere Verfahren zur Behandlung von Abwasser sind aus den Druckschriften DE 10 2015 002 395 A1 und WO 2013/039582 A1 bekannt. Die dort beschriebenen Verfahren sind nur für Abwasser mit geringem Gehalt an Trockensubstanz geeignet, eine Behandlung von Gülle ist daher ausgeschlossen. Insbesondere bei der Druckschrift DE 10 2015 002 395 A1 sind ein Festbettreaktor und ein Tropfkörper vorgesehen, die bei einem höheren Gehalt an Trockensubstanz verstopfen würden. Zudem sind sie speziell für eine Reduzierung der organischen Belastung (CSB, BSB) entwickelt (vgl. Anspruch 4) und dienen der biologischen Abwasserreinigung (vgl. Anspruch 10). Entsprechendes gilt für die Druckschrift WO 2013/039582 A1, auch wenn dort Gülle erwähnt ist. Tatsächlich verarbeitbar ist dort ebenfalls nur Abwasser mit einem so geringen Gehalt an Trockensubstanz, wie er bei Gülle praktisch nicht anzutreffen ist.

Ein Verfahren zur Behandlung von ansonsten unvergorener Schweinegülle geht aus der Druckschrift DD 147 091 A1 hervor. Das beschriebene Verfahren dient zur mechanischmikrobiologischen Behandlung von Schweinegülle, deren Ziel darin besteht, durch Kombination bekannter Vorrichtungen der Gülle- und Abwasseraufbereitung mittels Fest-Flüssig-Trennung einen schüttfähigen Güllefeststoff und in Verbindung mit einer mikrobiologischen Behandlung nach dem Belebtschlammverfahren eine stark BSB₅- und stickstoffgeminderte, von Feststoffen und Fäkalgeruch befreite Gülleflüssigkeit sowie einen in der Menge stark reduzierten, aerob stabilisierten, nicht mehr fäulnisfähigen Überschussschlamm zu gewinnen. Dabei erfolgt jedoch eine unmittelbare Anwendung der Fest-Flüssig-Trennung und der angewandten Prozesse der Abwasserbehandlung auf die Gülle. Eine anaerobe Behandlung wird nicht in Betracht gezogen. In der Folge werden nicht nur die Möglichkeiten der Energiegewinnung außer Acht gelassen, sondern auch ein erhöhter Aufwand bei der Abwasserreinigung in Kauf genommen. Gerade eine vorgeschaltete Biogasanlage dient als Energiequelle zum Betrieb der mechanischen Geräte wie Rührwerke und Pumpen sowie zur Erwärmung der Gülle, um den biologischen Abbau deutlich zu beschleunigen. Dies ist nach diesem Stand der Technik aber nicht vorgesehen.

Aus der Druckschrift DE 693 20 473 T2 sind ein Verfahren zur Behandlung eines flüssigen stickstoffreichen Abfallprodukts durch Nitrifikation und Denitrifikation und eine nach diesem Verfahren hergestellte Düngemittellösung mit einem vorbestimmbaren maximalen und definierten Stickstoffgehalt bekannt. Auch dabei wird das vorgeschlagene Behandlungsverfahren unmittelbar auf das zwangsläufig dünnflüssige Abfallprodukt (Jauche, Abwässer aus Kompostieranlagen) angewendet. Eine Anwendung auf Gülle oder gar einen Gärrest aus einer Biogasanlage ist nicht möglich. Dies ergibt sich aus dem maximal vorgesehenen Stickstoff-Gehalt von 3500 bis 4000 mg/l (Anspruch 3) und einem pH-Wert von 6 bis 7 (Anspruch 9). Außerdem ist es nach dem vorgeschlagenen Verfahren notwendig, zusätzlich organische Nährstoffe zuzugeben (Anspruch 13). Eine ausreichende Entstickung des Abfallprodukts ist nicht vorgesehen. Erst dadurch kann dieses ohne Mengenbegrenzung auf landwirtschaftlichen Flächen ausgebracht werden.

Die Druckschrift WO 2002/015945 A1 eine Anlage zur Vergärung von Gülle, Mist, Schlachtabfällen und nachwachsenden Rohstoffen. Die Reststoffe sollen zu einem handelbaren Dünger verarbeitet werden. Demnach ist es gar nicht zielführend, die Nährstoffe zu entfernen. Eine Nitrifizierung und Nitrifizierung läuft nur insofern ab, wenn zur Reinigung einer Membran für die Ultrafiltration Luft eingeblasen wird. Eine bewusste Nutzung des Verfahrens zur Stickstoffreduzierung ist nicht vorgesehen. Soweit der Nährstoffgehalt dennoch reduziert wird, erfolgt dies durch Zugabe von Kalk und durch Stripping. Außerdem ist hierbei die Zugabe von Brand- oder/und Löschkalk zur Anhebung der Temperatur und des pH-Werts vorgesehen. Damit kann bereits vor der Vergärung ggf. Stickstoff aus einer stickstoffreichen Biomasse entfernt werden, indem sich Ammonium dabei in gasförmigen Ammoniak wandelt.

Die Druckschrift EP 0 423 889 A1 beschreibt ein Verfahren zur Behandlung von Gülle, fermentierter Flüssiggülle und Abwasser durch Nitrifikation und danach Denitrifikation in jeweils einem USB-Reaktor. Die Nitrifizierung erfordert eine Anpassung des pH-Werts durch Kalkmilch oder eine Base. Vor dem Weiterleiten des Abwassers aus der Nitrifizierung wird die Belüftung gestoppt, der Schlamm wird sedimentiert und nur die obere Wasserschicht aus dem Behälter gelangt in den USB-Reaktor für die Denitrifikation. Hier ist wiederum eine Anpassung an den pH-Wert erforderlich, was mittels einer Säure und einer Kohlenstoffquelle, z. B. Ethanol, erfolgt. Nachteilig ist, dass diese Prozesse nicht in einem einzigen Behälter durchgeführt werden können, was einen erhöhten Anlagenaufwand bedeutet. Außerdem sind eine zweimalige Anpassung des pH-Werts sowie die Zugabe von externen Kohlenstoffquellen erforderlich. Weiterhin ist nachteilig, dass der Schlamm der Nitrifikation nicht für die Denitrifikation erhalten bleibt und nach Entnahme auch nicht als organisches Material zur Humusanreicherung auf landwirtschaftlichen Flächen dienen kann.

Die Druckschrift DE 10 2013 018 833 A1 beschreibt ein Verfahren zur Aufbereitung eines aus einem Fermenterreaktor stammenden Reststoffes. Dabei ist es vorgesehen, den Reststoff als Anmaischsubstrat für feste oder feststoffhaltige organische Biomasse zur Biogasgenerierung aufzubereiten. Dazu erfolgt zunächst eine Fest-Flüssigtrennung des Reststoffes, wonach der flüssige Anteil als Dünnlauf einem isolierten Reaktionsbehälter zugeführt wird, in dem dieser einer anaeroben Ammonium-Oxidation unter Nutzung von Anammox-Organismen zur Reduzierung der Ammoniumkonzentration im Submersverfahren unterzogen wird. Die Zönose des Reaktionsbehälters wird auf einer Temperatur von zwischen 35 bis 45°C gehalten. Das stickstoffabgereicherte Substrat wird als Prozesswasser der für die Biogasfermentation bestimmten Biomasse zugemischt und zusammen mit dieser der ersten Stufe eines Biogasprozesses zugeführt. Der beschriebene Verfahrensablauf ist insgesamt aufwändig, sowohl von der Anlagentechnik als auch vom Energiebedarf her, und insbesondere ungeeignet für den vorteilhaften Einsatz bei einer Vergärung in einem Fermenterreaktor unter niedriger Temperatur. Zudem ist es erforderlich, Sauerstoff in den Fermenterreaktor einzuführen, damit sich Nitrit bildet. Weitere Nachteile des vorgeschlagenen Verfahrens sind das Erfordernis einer Hydroxylamin-Ermittlung, ein TAC-Gehalt von 5.000 bis 30.000 mg/l sowie eine lange Reaktionszeit zwischen 24 h und 6 Tagen.

Die Druckschrift DE 10 2013 114 786 A1 beschreibt ein Verfahren und eine Vorrichtung zur Biogasgewinnung durch zur Nassvergärung unter Einsatz von stickstoffreichem, störstoffbeladenem Eingangssubstrat. Dieses weist eine Ammonium-Stickstoffkonzentration von mehr als 5 kg NH₄-N/m³ auf, wobei eine erste Prozessstufe (2) zur Störstoffabscheidung und eine zweite Prozessstufe (12) der kontinuierlichen Essigsäure- und Methanbildung bei einer im Wesentlichen stabilen Temperatur im psychrophilen Bereich vorgesehen sind. Weiterhin wird ein Gärbehälter (5, 10, 18) einer Biogasanlage (1) vorgeschlagen. Der Gärbehälter (5, 10, 18) weist eine vertikal angeordnete, mit einem rotatorischen Antrieb versehene Schnecke (25) auf, die in einem beidseitig offenen Rohr (26) läuft. Das Rohr (26) reicht dabei von unterhalb des Substratniveaus bis oberhalb des Bodens (22) des Gärbehälters (5, 10, 18) und ist mit dem Gärbehälter (5, 10, 18) fest verbunden. Das vorgeschlagene Verfahren und die Vorrichtung ermöglichen die Verwendung von zumindest stickstoffreichem Eingangssubstrat, ohne jedoch auf den Stickstoffgehalt Einfluss zu nehmen.

Aus der Druckschrift DE 10 2005 048 116 A1 ist ein Verfahren zur Herstellung von Düngemittelformkörpern aus durch die Energieerzeugung mittels Fermentation in einer Biogasanlage erhaltenen Gärresten bekannt und beinhaltet u. a. die Schritte Trennen des Gärrestes in einen Feststoffanteil und einen Flüssiganteil, Trocknen des Feststoffanteils, Erhöhen des Nährstoffgehaltes des Feststoffanteils und Umformen des Feststoffanteils in Düngemittelformkörper. Eine vorteilhafte Weiterbildung ist auf die Reinigung der entstehenden Abwässer mittels Verdampfung und anschließender Umkehrosmose gerichtet. Die vorgeschlagene Reinigung des Fugats auf diese Weise ist jedoch sehr aufwändig.

Auch aus der Druckschrift EP 2 657 212 A1 ist ein Verfahren zur Behandlung von Gärresten aus Biogasanlagen bekannt, hier zur Entsalzung bzw. zur Reduktion von Nährstoffen durch Waschung mit einem verflüssigten Gas wie Kohlendioxid und die Verwendung des erhaltenen organischen Substrats beispielsweise als Pflanzerde, Blumenerde, Torfersatz etc. Dazu erfolgt das Auswaschen mit dem verflüssigten Gas oder Gasgemisch, worauf die Feststoffe von dem verflüssigten Gas oder Gasgemisch abgetrennt werden und als organisches Substrat der Wiederverwertung zugeführt werden. Das Verfahren ist daher auf die Behandlung von Feststoffen ausgerichtet und zudem durch den Einsatz von verflüssigtem Gas oder Gasgemisch besonders energieaufwändig.

Es ist daher Aufgabe der vorliegenden Erfindung, ein einfaches und unter Reaktionsbedingungen im niedrigen Temperaturbereich einsetzbares Verfahren zur Reduzierung des Nährstoffgehalts von Gülle und Geflügelkot anzubieten, um Gülle und Geflügelkot bzw. flüssigen Gärrest ohne Rücksicht auf unerwünschte Nährstoffeinträge auf Flächen ausbringen zu können.

Die Aufgabe wird gelöst durch ein Verfahren zur Reduzierung des Nährstoffgehalts von Gülle und Geflügelkot, wobei eine Reduzierung des Gehalts an organischer Trockensubstanz durch den Abbau von Kohlenstoff in einer Biogasanlage gefolgt wird von einer zumindest teilweisen Nährstoffabtrennung aus flüssigem Gärrest der Biogasanlage. Erfindungsgemäß erfolgen der Abbau von Kohlenstoff in der Biogasanlage und die Nährstoffabtrennung aus dem Gärrest bei einer Verfahrenstemperatur unter 35° C. Der Stickstoff wird zu N₂-Stickstoff umgewandelt, der damit geeignet ist zur unmittelbaren und zudem klimaneutralen Abgabe in die Atmosphäre. Vorteilhafterweise arbeitet auch die Biogasanlage in einem niedrigen Temperaturbereich unter 35° C, um eine Temperaturänderung des Gärrests, insbesondere ein energetisch aufwändiges Aufheizen in Vorbereitung der Nährstoffabtrennung, zu vermeiden. Vorteilhaft sind aber auch andere Temperaturbereiche, die einen psychrophilen und damit insbesondere gegenüber hohem Stickstoffgehalt stabilen Prozess charakterisieren. Es sind auch Temperaturbereiche beispielsweise um 30 °C, um 25 °C, um 20 °C und um 15 °C vorgesehen, um eine optimale Anpassung an den vorgeschalteten Biogasprozess zu erreichen. Auch die Bereiche zwischen diesen Werten sind in Abhängigkeit von den Eigenschaften der eingesetzten Substrate und insbesondere des Stickstoffgehalts vorteilhaft anwendbar, so zwischen 15 und 20 °C, zwischen 20 und 25 °C, zwischen 25 und 30 °C und zwischen 30 und 35 °C.

Der Nährstoffgehalt im Gärrest ist durch das erfindungsgemäße Verfahren kontrollierbar, was den besonderen Vorteil der Erfindung ausmacht. Denn mit einem kontrollierten Nährstoffgehalt kann eine Kontamination von Boden und Gewässern und in der Folge Beschränkung der Ausbringmenge vermieden werden.

Die Biogasanlage und der dort ablaufende anaerobe Prozess dient dem Abbau von Kohlenstoff zur Reduzierung des Gehalts organischer Trockensubstanz sowie der Energiegewinnung, sodass Energie für die Nährstoffabtrennung bereitgestellt werden kann, beispielsweise in Form von Strom für einen Belüfter und Wärme für die Erwärmung des Gärrests nach der psychrophilen Vergärung. Die psychrophile Vergärung ermöglicht auch bei hohen ursprünglichen Nährstoffgehalten, vor allem an Stickstoffverbindungen, einen sicheren Betrieb des anaeroben Prozesses.

Die aus dem ursprünglichen Gärrest entnommene Stickstoffmenge sowie die Menge an Phosphor- und Kaliumverbindungen hängt von der Menge an Nährstoffen ab, die mit dem aus dem erfindungsgemäßen Verfahren resultierenden Magergärrest ausgebracht werden kann. Zur Reduzierung der Stickstoffmenge bieten sich bevorzugt zwei Verfahren an, einerseits Nitrifikation und Denitrifikation sowie andererseits Deammonifikation. Mit· beiden Verfahren wird ausschließlich der Stickstoff im Substrat zu N₂-Stickstoff umgewandelt, der dann klimaneutral und ungefährlich an die Umgebung abgegeben wird.

Nach einer vorteilhaften Ausgestaltung des Verfahrens ist demnach die zumindest teilweise Entfernung des Stickstoffs mittels Nitrifikation und Denitrifikation aus dem Gärrest, bevorzugt zur Behandlung von Schweinegülle oder Rindergülle eingesetzt, vorgesehen. Nitrifikation und Denitrifikation erfolgen dabei ohne Beigabe von Kohlenstoff, denn der Restkohlenstoff aus dem Gärrest reicht überraschender Weise für die stabile Verfahrensführung aus. Durch die Erfindung wird somit eine sehr einfache und kostengünstige Verfahrensführung möglich.

Mit steigender Raumbelastung, so zeigte sich ebenfalls überraschenderweise, kam es zum Anstieg des Ammoniumstickstoff-Gehaltes (Summenparameter für Stickstoff in Form von Ammonium-Ionen und Ammoniak) von 5 auf einem Bereich zwischen 10 und 12 g Ammoniumstickstoff pro Liter Substrat. Das Gleichgewicht zwischen Ammoniak und Ammonium in wässriger Lösung wird maßgeblich durch Temperatur und pH-Wert beeinflusst und kann unter deren Einbezug aus dem Ammoniumstickstoff-Gehalt rechnerisch ermittelt werden. Mit steigender Prozesstemperatur wurde ein höherer Ammoniak-Anteil ermittelt. Da Ammoniak als Hauptursache für eine Stickstoff-Hemmung gilt, wurde bei niedrigeren Temperaturen eine geringere Hemmung des Prozesses erwartet.

Zur Regelung des Verfahrensablaufs sind ein O₂-Sensor, ein Temperatursensor sowie ein pH-Wert-Sensor vorgesehen. Zur Regelung der Belüftungszeiten wird der O₂-Sensor verwendet. Es zeigten sich Vorteile gegenüber der Regelung über den pH-Wert. Die Kontrolle des O₂-Gehalts entspricht besser den Bedürfnissen der Anammox-Bakterien.

Besondere Vorteile ergeben sich in einem Temperaturbereich zwischen 15 °C und 25 °C. Dies entspricht dem psychrophilen Temperaturbereich der Biogasanlage, so dass selbst bei einer psychrophilen Verfahrensführung der Biogasanlage kein Aufheizen des Gärrests zur Entstickung notwendig wird.

Nach einer weiteren vorteilhaften Ausgestaltung des Verfahrens ist die zumindest teilweise Entfernung des Stickstoffs mittels Deammonifikation vorgesehen. Diese erfolgt ohne Beigabe von Kohlenstoff, der Restkohlenstoff aus Gärrest reicht aus. Somit wird keine zusätzliche Kohlenstoffquelle nötig. Die Deammonifikation wird in einem Temperaturbereich zwischen 25 °C und 34 °C, besonders bevorzugt zwischen 25 und 30° C, durchgeführt, was dem Temperaturbereich der Biogasanlage bei mesophilem Betrieb entspricht, in dem wenig Energie zum Aufheizen des Gärsubstrats benötigt wird und demzufolge vorteilhafterweise für andere Verwendungen zur Verfügung steht.

Das Sequencing-Batch-Reactor-Verfahren (SBR-Verfahren) ist eine Variante des konventionellen Belebtschlammverfahrens. Der SBR besteht aus einem Reaktionsraum, der zuerst die Funktion eines biologischen Reaktors und danach die eines Sedimentationsbeckens übernimmt. Im Gegensatz zu kontinuierlich durchflossenen Reaktoren wird der SBR diskontinuierlich befüllt und geleert. Die herkömmliche räumliche Trennung der biologischen Prozesse und der Sedimentation wird durch eine zeitliche ersetzt. Das Zeitintervall vom Beginn des Füllvorgangs bis zum Ende des Klarwasserabzugs und einer eventuellen Ruhephase wird als Zyklus bezeichnet. Ein einfacher Zyklus besteht aus den Phasen Füllen, Mischen, Füllen, Belüften, Sedimentieren und Dekantieren. In der Sedimentation setzt sich der Schlamm unten ab. Beim Dekantieren wird Klarwasser der oberen Schicht abgezogen. Dieses Verfahren wird oftmals bei industriellen Kläranlagen verwendet.

Der SBR-Zyklus ist durch eine aufeinanderfolgende zeitliche Prozessphasenfolge gekennzeichnet. Die hydraulische Entkopplung des SBR-Verfahrens macht es möglich, Dauer, Häufigkeit und Anordnung der Phasen des Zyklus variabel zu gestalten. Der Zyklus beginnt mit der Füllphase, in der bereits unter anaeroben oder anoxischen Verhältnissen die ersten Abbauprozesse beginnen. In der eigentlichen Abbau- oder Reaktionsphase wird der Reaktor belüftet. Je nach Reinigungsziel können auch unbelüftete Phasen eingeführt werden. Es folgt die Sedimentationsphase, in der sich der belebte Schlamm absetzt und sich eine Klarwasserschicht ausbildet. In der Dekantierphase wird das überstehende Klarwasser abgezogen. Anschließend kann eine betriebsbedingte Ruhephase folgen oder der Zyklus beginnt erneut. Eine separate Nachklärung ist beim SBR-Verfahren nicht notwendig.

Demgegenüber ist bei der vorliegenden Erfindung der Einsatz von zwei Klärbecken, eines für die Nitrifikation und eines für die Denitrifikation, vorgesehen. Dies ermöglicht eine kontinuierliche Verfahrensführung bei der Entstickung.

Es hat sich als vorteilhaft erwiesen, wenn vor dem Eintritt des Gärrests in die Anlage zur Entfernung von Stickstoff, vor allem wenn der Gärrest einen höheren Trockensubstanz-Gehalt über 4 bis 8 % aufweist, eine mechanische Separation des Gärrests, optional auch mit dem Einsatz von Flockungsmittel, vor allem bei niedrigem Trockensubstanz-Gehalt, vorgenommen wird. Nach der Vergärung erfolgt hierzu eine Separierung des Gärrestes, um den Gehalt an organischen Bestandteilen weiter zu reduzieren. Die separierten Feststoffe können dann ohne weitere Behandlung gelagert und als organischer Dünger in der Landwirtschaft verwendet werden. Die abgeschiedene Flüssigkeit wird erfindungsgemäß weiter behandelt und als flüssiger Gärrest in die Anlage zur Entfernung von Stickstoff eingeleitet. Als zusätzlicher Vorteil ist eine verbesserte Entstickung in der Anlage zur Entfernung von Stickstoff zu nennen, denn je weniger organisches Material im Substrat, dem Gärrest, verbleibt, desto besser verläuft der Stickstoffabbau, denn anderenfalls nehmen die Bakterien, die den Stickstoffabbau vollziehen, organisches Material auf anstelle des Stickstoffabbaus. Bevorzugt wird durch die Separation ein Ziel-TS-Gehalt zwischen 1 und 3 % oder zwischen 1,5 und 4 % eingestellt. Bei sehr dünner Schweinegülle oder anderen Substraten mit einem geringen Trockensubstanzgehalt ist keine Separierung notwendig und auch nicht möglich.

In einem weiteren Schritt kann bei Bedarf neben der Entfernung oder Reduzierung von Stickstoffverbindungen noch Kalium und Phosphat entfernt werden. Vorteilhafte Ausführungsformen des erfindungsgemäßen Verfahrens sehen deshalb eine Phosphatreduzierung oder Phosphateliminierung durch Anwendung eines Fällungsmittels oder eine Kaliumreduzierung oder Kaliumeliminierung, ebenfalls durch Anwendung eines Fällungsmittels, vor.

Der nun überwiegend entstickte Magergärrest kann dann auf landwirtschaftliche Flächen in sehr hoher Menge ohne die Gefahr von Umweltschäden, vor allem an Wasserressourcen, ausgebracht werden, da die bislang limitierte Ausbringmenge ausschließlich durch den Nährstoffgehalt begrenzt wird.

## Patentansprüche

1. Verfahren zur Reduzierung des Nährstoffgehalts von Gülle und Geflügelkot, wobei eine Reduzierung des Gehalts an organischer Trockensubstanz durch den Abbau von Kohlenstoff in einer Biogasanlage gefolgt wird, wobei von einer zumindest teilweisen Nährstoffabtrennung aus flüssigem Gärrest der Biogasanlage der Abbau von Kohlenstoff in der Biogasanlage und die Nährstoffabtrennung aus dem Gärrest bei einer Verfahrenstemperatur unter 35° C erfolgen, **dadurch gekennzeichnet, dass** die zumindest teilweise Nährstoffabtrennung die zumindest teilweise Entfernung von Stickstoffverbindungen sowie Phosphor- und Kaliumverbindungen umfasst, wobei die zumindest teilweise Entfernung des Stickstoffs mittels Nitrifikation und Denitrifikation oder mittels Deammonifikation erfolgt, wodurch der Stickstoff zu N₂-Stickstoff umgewandelt wird.

2. Verfahren nach Anspruch 1, wobei vor der Nährstoffabtrennung eine mechanische Separation des Gärrests erfolgt, während der ein Anteil von Trockensubstanz abgeschieden und die übrigen Bestandteile als flüssiger Gärrest der Nährstoffabtrennung zugeführt werden.

3. Verfahren nach Anspruch 1 oder 2, wobei die Nitrifikation und Denitrifikation bei einem Temperaturbereich zwischen 15 °C und 25 °C und die Deammonifikation bei einem Temperaturbereich zwischen 25 °C und 34 °C durchgeführt wird.

4. Verfahren nach Anspruch 2, wobei durch die Separation ein Trockensubstanzgehalt zwischen 1,5 und 4 % eingestellt wird.

5. Verfahren nach einem der vorherigen Ansprüche, wobei die zumindest teilweise Entfernung von Phosphorverbindungen durch Anwendung eines Fällungsmittels oder durch Umkehrosmose und Mikrofiltration erfolgt.

6. Verfahren nach einem der vorherigen Ansprüche, wobei die zumindest teilweise Entfernung von Kaliumverbindungen durch Anwendung eines Fällungsmittels durch Umkehrosmose und Mikrofiltration erfolgt.

## Claims

1. A method for reducing the nutrient content of manure and poultry faeces, wherein a reduction of the content of dry organic matter is followed by the removal of carbon in a biogas plant, wherein from an at least partial nutrient removal from liquid fermentation residue of the biogas plant the removal of carbon in the biogas plant and the nutrient removal from the fermentation residue are carried out at a process temperature below 35 °C, **characterized in that** the at least partial nutrient removal comprises at least partial removal of nitrogen compounds as well as phosphorus and potassium compounds, wherein the at least partial removal of nitrogen is carried out by means of nitrification and denitrification or by means of deammonification, whereby the nitrogen is converted to N2 nitrogen.

2. The method according to claim 1, wherein prior to the nutrient removal a mechanical separation of the fermentation residue is performed, during which a portion of dry matter is removed and the remaining components are fed to the nutrient removal as liquid fermentation residue.

3. The method according to claim 1 or 2, wherein the nitrification and denitrification are carried out at a temperature range between 15 °C and 25 °C and the deammonification is carried out at a temperature range between 25 °C and 34 °C.

4. The method according to claim 2, wherein a dry matter content between 1.5 and 4 % is adjusted by the separation.

5. The method according to any one of the preceding claims, wherein the at least partial removal of phosphorus compounds is carried out by application of a precipitating agent or by reverse osmosis and microfiltration.

6. The method according to any one of the preceding claims, wherein the at least partial removal of potassium compounds is carried out by application of a precipitating agent by reverse osmosis and microfiltration.

## Revendications

1. Procédé de réduction de la teneur en nutriments de lisier et fientes de volaille, dans lequel une réduction de la teneur en substance sèche organique par la dégradation de carbone dans une centrale à biogaz est suivie, dans lequel la dégradation de carbone dans la centrale à biogaz et la séparation de nutriments à partir du digestat s'effectuent à une température de procédé en dessous de 35 °C par une séparation de nutriments au moins partielle à partir de digestat liquide de la centrale à biogaz, **caractérisé en ce que** la séparation de nutriments au moins partielle comprend l'élimination au moins partielle de composés azotés ainsi que de composés de phosphore et potassium, dans lequel l'élimination au moins partielle de l'azote s'effectue au moyen de nitrification et dénitrification ou au moyen de désammonification, par laquelle l'azote est transformé en azote N₂.

2. Procédé selon la revendication 1, dans lequel une séparation mécanique du digestat pendant laquelle une fraction de substance sèche est séparée et les constituants restants sont acheminés en tant que digestat liquide à la séparation de nutriments a lieu avant la séparation de nutriments.

3. Procédé selon la revendication 1 ou 2, dans lequel les nitrification et dénitrification sont réalisées à une plage de température comprise entre 15 °C et 25 °C et la désammonification est réalisée à une plage de température comprise entre 25 °C et 34 °C.

4. Procédé selon la revendication 2, dans lequel une teneur en substance sèche comprise entre 1,5 et 4 % est réglée par la séparation.

5. Procédé selon une des revendications précédentes, dans lequel l'élimination au moins partielle de composés de phosphore s'effectue par utilisation d'un agent de précipitation ou par osmose inverse et microfiltration.

6. Procédé selon une des revendications précédentes, dans lequel l'élimination au moins partielle de composés de potassium s'effectue par utilisation d'un agent de précipitation par osmose inverse et microfiltration.
